# FASCICULE DE BREVET EUROPEEN

(11) **EP 2 460 159 B1**
(45) Date de publication et mention de la délivrance du brevet: **12.11.2014**
(21) Numéro de dépôt: 10734138.0
(22) Date de dépôt: 21.07.2010
(51) Int. Cl.: G11B 33/12

(54) **BOITIER DESTINE A RECEVOIR UN DISQUE DUR EXTRACTIBLE ET COMPRENANT UNE CAME BASCULANTE POUR EXTRAIRE CE DISQUE DUR**
GEHÄUSE ZUR AUFNAHME EINER ENTFERNBAREN FESTPLATTE MIT EINER SCHWENKNOCKE ZUR ENTFERNUNG DER FESTPLATTE
HOUSING FOR RECEIVING A REMOVABLE HARD DISK, INCLUDING A TILTING CAM FOR REMOVING SAID HARD DISK

(30) Priorité: 27.07.2009 FR 0903677
(43) Date de publication de la demande: 06.06.2012
(73) Titulaire: SAGEMCOM BROADBAND SAS, 92500 Rueil Malmaison (FR)
(72) Inventeur: VENOM, Didier, F-92500 Rueil Malmaison (FR); SUSINI, Dominique, F-92500 Rueil Malmaison (FR); SONJON, Grégory, F-92500 Rueil Malmaison (FR)
(74) Mandataire: Beaudouin-Lafon, Emmanuel
(86) Numéro de dépôt international: PCT/EP2010/060551
(87) Numéro de publication internationale: WO 2011/012514

(56) Documents cités:
- WO-A1-95/10129
- US-A- 6 059 588

## Description

L'invention concerne un boîtier destiné à recevoir un élément extractible tel qu'un disque dur extractible, ce boîtier comportant une face avant ouverte par laquelle est engagé le disque dur extractible, ainsi qu'un organe mobile actionnable pour extraire partiellement un disque engagé dans ce boîtier afin de permettre à un utilisateur de saisir la partie avant de ce disque dur afin de l'extraire complètement.

### ARRIERE PLAN DE L'INVENTION

En pratique, un connecteur électronique interne est situé en partie arrière d'un tel boîtier lorsque l'ensemble est monté par exemple sur un circuit imprimé. Lorsqu'un utilisateur engage un disque dur dans ce boîtier, il exerce une pression sur la partie avant du boîtier pour qu'un connecteur complémentaire situé en partie arrière du disque dur, s'engage dans le connecteur interne situé au niveau de la face arrière du boîtier.

Ainsi, une fois que le disque dur est en place dans le boîtier, les connecteurs sont complètement engagés l'un dans l'autre, de sorte que le disque dur extractible est opérationnel et peut donc être pris en charge par le système d'exploitation associé au circuit imprimé du boîtier.

Compte tenu de l'emboîtement nécessaire des connecteurs lorsque le disque dur est en place, il est nécessaire d'exercer, depuis l'arrière du boîtier et sur le disque dur, un effort de pression permettant de désolidariser les connecteurs l'un de l'autre afin d'initier l'extraction du disque dur.

Cet effort est typiquement assuré au moyen d'une came montée basculante sur le boîtier et comprenant une extrémité d'éjection venant en appui sur le fond du disque dur lorsque cette came est actionnée. L'effort exercé par l'extrémité d'éjection permet de désolidarise les connecteurs et d'extraire en partie le disque dur pour permettre à l'utilisateur de le saisir par sa partie avant qui dépasse ainsi de la face avant du boîtier.

En pratique, un tel boîtier qui a une forme généralement parallélépipédique est fabriqué à partir d'éléments de tôle qui sont découpés, emboutis, pliés, et solidarisés les uns aux autres.

Concrètement, le montage de la came basculante qui est elle-même un élément de tôle nécessite ainsi de prévoir dans cette came un trou ou analogue, et de la riveter au corps du boîtier au moyen de ce trou de façon à la solidariser au corps de boîtier tout en lui permettant de pivoter par rapport à celui-ci pour qu'elle puisse être actionné pour éjecter le disque dur.

Ce montage nécessite généralement de prévoir plusieurs épaisseurs de tôle au niveau de la région du boîtier portant la came basculante, pour que le rivet puisse être rigidement solidaire du corps de boîtier, afin de constituer un pivot rigidement solidaire du boîtier et autour duquel la came peut pivoter.

Le document WO 95/10129 divulgue un boîtier destiné à recevoir un élément extractible incluant les caractéristiques du préambule de la revendication 1.

### OBJET DE L'INVENTION

Le but de l'invention est de proposer une solution pour simplifier le montage de cette came basculante afin de réduire le coût de fabrication de l'ensemble du boîtier.

### RESUME DE L'INVENTION

A cet effet, l'invention a pour objet un boîtier destiné à recevoir un élément extractible, ce boîtier comportant un corps de boîtier généralement parallélépipédique équipé d'une came basculante située en partie arrière du corps de boîtier, cette came basculante comprenant une extrémité d'actionnement et une extrémité d'éjection situées de part et d'autre d'une portion centrale de cette came pour éjecter l'élément extractible sur basculement de cette came autour de sa portion centrale, dans lequel le corps de boîtier comporte en partie arrière de sa face supérieure une patte incluant une embase prolongée par une languette qui est orientée parallèlement à cette face supérieure tout en étant espacée de cette face supérieure, ainsi qu'un ergot dépassant de la face supérieure en étant situé en vis-à-vis d'une extrémité libre de cette languette, la came basculante étant solidarisée au corps de boîtier par encliquetage en ayant sa portion centrale engagée entre la languette et la face supérieure du corps de boîtier d'une part et entre l'ergot et l'embase d'autre part.

Avec cette solution, il n'est pas nécessaire de prévoir un axe fixe rigidement solidaire du corps de boîtier. Ce corps de boîtier peut être fabriqué en matière plastique moulée de manière à comporter la patte et l'ergot en partie arrière de sa face supérieure. Il peut également être fabriqué en tôle découpée et emboutie, la patte étant alors formée par une prédécoupe en U qui est ensuite emboutie pour s'étendre parallèlement à la face supérieure du boîtier tout en étant espacée de celle-ci, l'ergot étant alors obtenu de manière analogue.

L'invention concerne également un boîtier tel que défini ci-dessus, dans lequel l'ergot comporte une face orientée en direction opposée à l'extrémité libre de la languette et inclinée par rapport à la face supérieure du corps de boîtier pour constituer une rampe facilitant l'engagement de la came entre la languette et la face supérieure.

L'invention concerne également un boîtier tel que défini ci-dessus, comprenant en outre un levier en tôle emboutie monté coulissant le long d'une face latérale du corps de boîtier, ce levier comportant une extrémité formant poussoir et débouchant en face avant du corps de boîtier, et une autre extrémité liée à l'extrémité d'actionnement de la came, pour faire basculer cette came sur enfoncement de l'extrémité formant poussoir.

L'invention concerne également un boîtier tel que défini ci-dessus, dans lequel le corps de boîtier comporte à sa partie arrière supérieure deux pattes orientées parallèlement à cette face supérieure ainsi que deux ergots dépassant chacun de cette face supérieure et situés chacun en vis-à-vis de l'une des pattes, ces pattes et ces étant disposées de part et d'autre d'un plan de symétrie général du corps de boîtier, et ces ergots étant disposés de part et d'autre d'un plan de symétrie général du boîtier.

L'invention concerne également un boîtier tel que défini ci-dessus, dans lequel le corps de boîtier comporte des éléments de guidage d'un levier permettant de monter ce levier coulissant soit le long d'une face latérale de ce levier, soit le long d'une autre face latérale de ce corps de boîtier.

### BREVE DESCRIPTION DES FIGURES

La figure 1 est une vue en perspective montrant la face supérieure ainsi que la face avant et la face latérale gauche du corps de boîtier selon l'invention ainsi que la came basculante montée à sa partie arrière et le levier d'actionnement monté à sa face latérale gauche ;
La figure 2 est une vue en perspective montrant la face supérieure ainsi que la face arrière et la face latérale gauche du boîtier selon l'invention ainsi que la came basculante montée à sa partie arrière et le levier d'actionnement monté à sa face latérale gauche ;
La figure 3 est une vue en perspective montrant la face supérieure ainsi que la face avant et la face latérale droite du boîtier selon l'invention ainsi que la came basculante montée à sa partie arrière et le levier d'actionnement monté à sa face latérale droite.

### DESCRIPTION DETAILLEE DE L'INVENTION

Le boîtier selon l'invention qui est repéré par 1 dans les figures comporte un corps de boîtier en matière plastique issu de moulage repéré par 2, qui est équipé d'une came basculante 3 et d'un levier d'actionnement 4.

Le corps de boîtier 2 qui a une forme généralement parallélépipédique comprend une face ou paroi supérieure ajourée repérée par 6, une face ou paroi inférieure également ajourée repérée par 7, deux faces ou parois latérales droite et gauche repérées respectivement par 8 et 9, ainsi qu'une face avant 11 qui est complètement ouverte et une face ou paroi arrière 12.

Ce corps de boîtier 2 est destiné à recevoir un élément extractible non représenté, qui dans l'exemple d'application des figures est un disque dur extractible. L'engagement de ce disque dur qui a lui aussi une forme généralement parallélépipédique consiste ainsi à le placer en vis-à-vis de la face avant ouverte 11, et à le faire coulisser dans le boîtier 1, jusqu'à ce qu'il vienne en appui contre la paroi arrière 12 du corps de boîtier.

L'engagement du disque dur extractible se fait en le déplaçant selon la direction longitudinale AX de ce boîtier, cette direction coïncidant avec un axe parallèle aux faces latérales et supérieure du boîtier.

Concrètement, un connecteur électronique qui n'est pas visible dans les figures, comprenant des branches orientées selon la direction AX est situé au niveau de la paroi arrière 12, pour recevoir les broches d'un connecteur correspondant équipant le disque dur extractible lorsque celui-ci est complètement enfoncé dans le boîtier.

En pratique, l'engagement des broches du connecteur du disque dur dans les broches correspondantes situées au niveau de la paroi arrière 12 est en soi suffisant pour considérer qu'il assure le blocage de ce disque dur dans le boîtier. L'extraction du disque dur est assurée en exerçant à la face arrière du disque dur extractible un effort de poussée orienté selon la direction AX vers la face avant 11.

Cet effort de poussée est exercé par la came basculante 3 qui est située en partie arrière du boîtier 1 et qui comprend une extrémité venant en appui sur la face arrière du disque dur extractible lorsque cette came bascule.

Cette came basculante 3 qui est fabriquée en tôle découpée a une forme générale de bras ou analogue, présente une extrémité d'actionnement 16 ayant une forme de pointe par laquelle elle peut être actionnée pour basculer, et une extrémité d'éjection 14 par laquelle elle exerce une poussée sur le disque extractible afin de l'éjecter lorsqu'elle bascule.

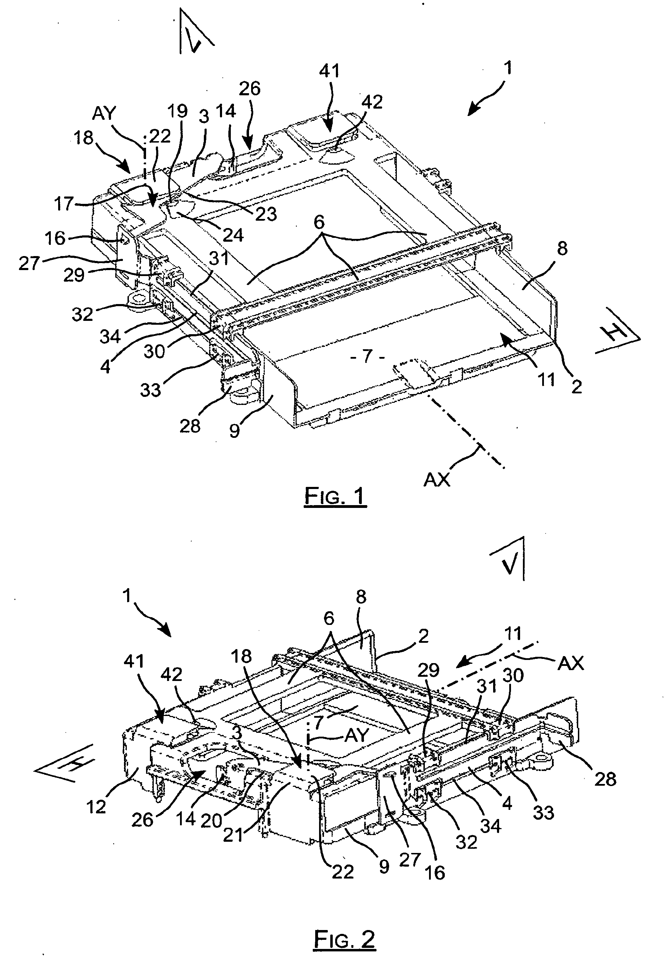

Comme visible dans la figure 1, cette came 3 comprend une portion centrale 17 située entre ses extrémités 14 et 16, et autour de laquelle elle bascule entre une position de repos et une position basculée. La position de repos correspond à celle qu'occupe la came dans les figures, et la position basculée correspond à celle qu'occupe la came pour éjecter le disque dur extractible, et tout au moins pour le déconnecter du connecteur électronique de la paroi arrière 12 de ce boîtier 1.

Dans les figures 1 et 2, on a représenté symboliquement un axe repéré par AY qui s'étend perpendiculairement à la face supérieure 6 en étant situé au niveau de la portion centrale 17 de la came 3, et autour duquel cette came pivote lorsqu'elle est actionnée.

Cette came 3 est solidarisée au corps de boîtier 2 grâce à une patte 18 et à un ergot 19, tout en étant apte à pivoter par rapport à celui-ci. La patte 18 comprend une embase 21 qui s'étend perpendiculairement à la face supérieure 6, dans le prolongement de la paroi arrière 12, et elle est elle-même prolongée par une languette 22 généralement plane. Cette languette 22 s'étend parallèlement à la face supérieure 6 tout en étant espacée de cette face d'une distance correspondant sensiblement à l'épaisseur de la tôle constituant la came 3 dans la portion centrale 17.

L'ergot 19 dépasse quant à lui de la face supérieure 6 tout en étant situé en vis-à-vis de l'extrémité libre de la languette 22. Il a une hauteur qui correspond sensiblement à la distance séparant la languette 22 de la face supérieure 6, et il est espacé de l'extrémité libre de cette languette 22.

L'assemblage de la came 3 à la partie arrière du corps de boîtier 2 est assuré simplement par encliquetage. Le bord 20 de la portion centrale 17 de la came 3 est alors engagé entre l'extrémité libre de la languette 22 et la face supérieure 6 du corps du boîtier, cette portion centrale 17 ayant alors sa face inférieure en appui sur l'extrémité libre de l'ergot 19. Un effort est alors exercé sur la came 3 selon la direction AX, pour rapprocher la portion centrale 17 de la came 3 de l'embase 21 de la patte 18.

Sous l'effet de cet effort d'encliquetage appliqué à la came 3, la languette 22 fléchit pour s'ouvrir en s'écartant de la face supérieure 6, ce qui permet à la came d'avancer vers l'embase 21 tout en ayant sa face inférieure en appui sur l'ergot 19. A la fin de ce déplacement, la portion centrale 17 de la came vient se loger en appui sur la face supérieure 6 lorsque le bord opposé 23 de cette portion centrale 17 arrive au niveau de l'ergot 19 et qu'il glisse le long de cet ergot 19 vers la face supérieure 6 sous l'effet des efforts de flexion appliqués par la languette 22 à cette portion centrale 17.

A ce stade, la came 3 est complètement encliquetée dans son logement, c'est-à-dire que son montage est sensiblement terminé. Comme visible sur les figures, lorsque la came 3 est encliqueté, elle est en appui par sa face inférieure sur la face supérieure 6 du corps de boîtier, et la face inférieure de la languette 22 est en appui sur la face supérieure de cette came.

Complémentairement, la came 3 est aussi bloquée longitudinalement, c'est-à-dire selon la direction AX, d'une part par l'embase 21 de la patte 18 qui constitue une butée à l'encontre du bord 20 de la portion centrale 17 de cette came 3, et d'autre part par l'ergot 19 qui constitue une butée à l'encontre du bord opposé 23 de cette portion centrale 17.

L'embase 21 de la patte 18 peut avantageusement être pourvue d'un pion ou butée interne non visible dans les figures, offrant une surface hémicylindrique, d'axe AY, contre laquelle le bord 20 de la portion centrale 17 vient en appui, en particulier lors du basculement de la came 3.

Par ailleurs, l'ergot 19 a comprend une face orientée vers l'extrémité libre de la languette 22 qui a une forme généralement hémicylindrique ou analogue, de manière à constituer une butée à l'encontre du bord 23 de la partie centrale 17.

En ce qui concerne la face de l'ergot 19 qui est orientée à l'opposée de l'extrémité libre de la languette 22, qui est repérée par 24, elle a au contraire une forme de portion de secteur conique s'étendant depuis la face supérieure 6 du corps de boîtier, jusqu'à l'extrémité de cet ergot 19.

Cette face 24 constitue ainsi une rampe facilitant l'engagement de la came 3 entre la languette 22 et la face supérieure 6 lors de l'encliquetage de cette came 3. En particulier, elle assure que durant cet engagement, l'ergot 19 ne constitue pas un obstacle s'opposant au déplacement de la came.

La came 3 a ainsi sa partie centrale qui est maintenue parallèle à la face supérieure 6, et elle est apte à pivoter autour de sa portion centrale 17. L'extrémité d'éjection 14 de cette came 3 est une partie qui est repliée par rapport à la portion centrale 17, et qui est engagée dans un évidement 26 s'étendant en partie centrale de la paroi arrière 12 et de la partie arrière de la face supérieure du corps de boîtier. Cet évidement 26 présente des dimensions supérieures à celles de l'extrémité d'éjection pour lui offrir la mobilité lui permettant de venir en appui sur la face arrière d'un disque dur extractible engagé dans le boîtier.

D'une manière générale, la position transversale de la came basculante 3 est stable, c'est-à-dire que les efforts appliqués à cette came 3 étant longitudinaux, ils ne tendent pas à la déplacer transversalement par rapport au corps de boîtier. De plus, sa mobilité transversale est limitée par l'évidement 26 dans lequel l'extrémité d'éjection 14 est engagée.

Complémentairement, d'autres moyens peuvent être prévus pour éviter bloquer transversalement la came 3 si nécessaire. Ces moyens peuvent comporter un évidement au niveau du bord 23 de la came 3 de manière à entourer partiellement l'ergot 19 lorsque la came est en place. Ils peuvent aussi comporter un évidement analogue au niveau du bord 20 de la came de manière à entourer partiellement l'embase de la patte lorsque la came 3 est en place.

L'éjection du disque dur est obtenue en exerçant sur l'extrémité d'actionnement 16 de cette came 3 un effort selon l'axe AX et en direction de la face arrière 12, pour faire basculer la came 3 et exercer de la sorte un effort sur la face arrière du disque extractible via l'extrémité d'éjection 14 et en direction de la face avant 11.

L'extrémité d'actionnement 16 de la came est déplacée au moyen du levier 4 qui est monté coulissant le long de la paroi latérale gauche 9, et qui comporte une extrémité d'actionnement 27 située au niveau de l'extrémité d'actionnement 16 de la came 3 et une extrémité opposée 28 formant bouton poussoir qui est située à proximité de la face avant 11 de ce boîtier.

Ce levier est constitué à partir d'une tôle généralement rectangulaire découpée et emboutie ou pliée, il coulisse le long de la paroi latérale 9 en étant orienté parallèlement à l'axe AX. Ce levier 4 formant coulisseau est solidarisé au corps de boîtier par deux pattes supérieures recourbées 29 et 30 qui enserrent son bord supérieur 31, et par deux pattes inférieures recourbées 32 et 33 qui enserrent son bord inférieur 34 de manière à plaquer l'ensemble du levier contre la face externe de cette paroi latérale gauche 9.

Comme visible dans les figures, l'extrémité d'actionnement 27 de ce levier 4 comprend une ouverture ou trou supérieure et une ouverture ou trou inférieure. Lorsque le levier est monté à gauche, comme dans les figures 1 et 2, l'extrémité d'actionnement 16 de la came 3 est engagée dans le trou supérieur de l'extrémité 27 du levier, de manière à être cinématiquement liée à ce levier.

Complémentairement, un ressort de rappel non représenté tend continuellement à ramener le levier 4 vers sa position de repos, qui correspond à celle qu'il occupe dans les figures 1 et 2, et pour laquelle la came 3 n'est pas basculée.

Lorsqu'un utilisateur exerce un effort sur l'extrémité 28 du levier, formant poussoir, pour enfoncer ce levier 4 vers la paroi arrière 12, il provoque ainsi, à l'encontre du ressort de rappel non représenté, le basculement de la came 3 pour éjecter le disque dur extractible.

Lorsque l'utilisateur relâche l'extrémité 28, le levier est ramené vers sa position de repos par le ressort de rappel, et il tire avec lui l'extrémité d'actionnement 16 de la came 3, ce qui a pour effet de ramener également cette came vers sa position de repos.

Comme visible dans les figures, l'ensemble du boîtier est généralement symétrique par rapport à un plan médian vertical V parallèle aux parois latérales 8 et 9 et équidistant de ces parois. Par ailleurs, le levier est lui aussi symétrique par rapport à un plan horizontal H parallèle aux faces supérieure et inférieure 6 et 7 et situé à mi-distance de ces faces.

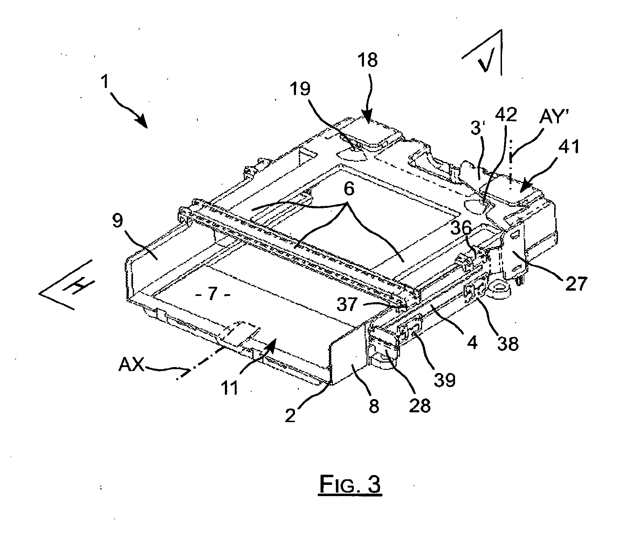

Grâce à ces symétries, le levier 4 peut ainsi être monté coulissant selon le cas le long de la paroi latérale gauche 9, comme dans les figures 1 et 2, ou bien coulissant le long de la paroi latérale droite 8 comme dans la figure 3, ce qui rend le boîtier polyvalent en permettant en pratique de placer son bouton poussoir d'éjection soit en partie droite de la face avant 11 soit en partie gauche de cette face avant.

Ainsi, dans l'exemple de la figure 3, le levier 4 est monté coulissant le long de la paroi droite 8, en étant retenu le long de celle-ci par quatre pattes repérées par 36-39 qui sont les symétriques des pattes 29, 30, 32, 33 par rapport au plan V. Comme visible dans les figures, le levier 4 occupe alors une position qui est la symétrique de celle qu'il occupe dans la configuration des figures 1 et 2.

Dans cette autre configuration, la came utilisée qui est repérée par 3' est une pièce qui est par construction la symétrique de la came 3 des figures 1 et 2, par rapport par exemple au plan de symétrie V.

Cette came 3' est là aussi installée par encliquetage, dans le logement délimité par une autre patte 41 et par un autre ergot 42. Comme on le voit dans les figures, la patte 41 est la symétrique de la patte 18 par rapport au plan V, et l'ergot 42 est le symétrique de l'ergot 19 par rapport au plan V.

Tout comme dans le cas d'un montage à gauche, l'extrémité d'actionnement de la came est engagée dans le trou supérieur de l'extrémité d'actionnement 27 du levier 4.

Lorsque le levier 4 est monté à droite, comme dans la figure 3, il est tourné d'un demi tour autour de l'axe AX par rapport au cas où il est monté à gauche comme dans les figure 1 et 2. Ainsi, dans le cas d'un montage à droite, le trou supérieur de l'extrémité d'actionnement 27 est le trou qui occupe la position inférieure dans le cas d'un montage à gauche.

## Revendications

1. Boîtier (1) destiné à recevoir un élément extractible, ce boîtier comportant un corps de boîtier (2) généralement parallélépipédique équipé d'une came basculante (3, 3') située en partie arrière du corps de boîtier (2), et de moyens d'actionnement de cette came basculante (3, 3'), cette came basculante (3, 3') comprenant une extrémité d'actionnement (16) et une extrémité d'éjection (14) situées de part et d'autre d'une portion centrale (17) de cette came (3, 3') pour éjecter l'élément extractible sur basculement de cette came (3, 3') autour de sa portion centrale (17), **caractérisé en ce que** le corps de boîtier (2) comporte en partie arrière de sa face supérieure (6) une patte (18, 41) incluant une embase (21) prolongée par une languette (22) qui est orientée parallèlement à cette face supérieure (6) tout en étant espacée de cette face supérieure (6), ainsi qu'un ergot (19, 42) dépassant de la face supérieure (6) en étant situé en vis-à-vis d'une extrémité libre de cette languette (22), la came basculante (3, 3') étant solidarisée au corps de boîtier (2) par encliquetage en ayant sa portion centrale (17) engagée entre la languette (22) et la face supérieure (6) du corps de boîtier (2) d'une part et entre l'ergot (19) et l'embase (21) d'autre part.

2. Boîtier selon la revendication 1, dans lequel l'ergot (19, 42) comporte une face (24) orientée en direction opposée à l'extrémité libre de la languette (22) et inclinée par rapport à la face supérieure (6) du corps de boîtier (2) pour constituer une rampe facilitant l'engagement de la came (3, 3') entre la languette (22) et la face supérieure (6).

3. Boîtier selon la revendication 1 ou 2, dans lequel les moyens d'actionnement de la came basculante (3, 3') comprennent un levier (4) monté coulissant le long d'une face latérale (8, 9) du corps de boîtier (2), ce levier (4) comportant une extrémité (28) formant poussoir et débouchant en face avant (11) du corps de boîtier (2), et une autre extrémité (27) liée à l'extrémité d'actionnement (16) de la came (3, 3'), pour faire basculer cette came (3, 3') sur enfoncement de l'extrémité (28) formant poussoir.

4. Boîtier selon l'une des revendications 1 à 3, dans lequel le corps de boîtier comporte à sa partie arrière supérieure deux pattes (18, 41) orientées parallèlement à cette face supérieure (6) ainsi que deux ergots (19, 42) dépassant chacun de cette face supérieure et situés chacun en vis-à-vis de l'une des pattes (18, 41), ces pattes (18, 41) étant disposées de part et d'autre d'un plan de symétrie général du corps de boîtier (2), et ces ergots (19, 42) étant disposés de part et d'autre d'un plan de symétrie général du boîtier (2).

5. Boîtier selon les revendications 3 et 4, dans lequel le corps de boîtier (2) comporte des éléments de guidage (29, 30, 32, 33, 36, 37, 38, 39) d'un levier (4) permettant de monter ce levier (4) coulissant soit le long d'une face latérale (8) de ce corps de boîtier, soit le long d'une autre face latérale (9) de ce corps de boîtier.

## Patentansprüche

1. Gehäuse (1), das dazu bestimmt ist, ein herausziehbares Element aufzunehmen, wobei dieses Gehäuse einen im Allgemeinen quaderförmigen Gehäusekörper (2) umfasst, der mit einem Schwenknocken (3, 3') versehen ist, der sich im hinteren Teil des Gehäusekörpers (2) befindet, sowie Betätigungsmittel zur Betätigung dieses Schwenknockens (3, 3'), wobei dieser Schwenknocken (3, 3') ein Betätigungsende (16) und ein Auswurfende (14) hat, die sich zu beiden Seiten eines zentralen Abschnitts (17) dieses Nockens (3, 3') befinden, um das herausziehbare Element in Reaktion auf ein Verschwenken dieses Nockens (3, 3') um seinen zentralen Abschnitt (17) auszuwerfen, **dadurch gekennzeichnet, dass** der Gehäusekörper (2) im hinteren Teil seiner Oberseite (6) eine Lasche (18, 41) hat, die eine Fußplatte (21) einschließt, die durch eine Zunge (22) verlängert ist, die parallel zu dieser Oberseite (6) ausgerichtet und zugleich zu dieser Oberseite (6) beabstandet ist, sowie eine Nase (19, 42) hat, die von der Oberseite (6) absteht, wobei sie sich gegenüber einem freien Ende dieser Zunge (22) befindet, wobei der Schwenknocken (3, 3') durch Einrasten mit dem Gehäusekörper (2) verbunden ist, indem sein zentraler Abschnitt (17) zwischen der Zunge (22) und der Oberseite (6) des Gehäusekörpers (2) einerseits und zwischen der Nase (19) und der Fußplatte (21) andererseits gehalten ist.

2. Gehäuse nach Anspruch 1, wobei die Nase (19, 42) eine Fläche (24) umfasst, die in entgegengesetzter Richtung zum freien Ende der Zunge (22) ausgerichtet und gegenüber der Oberseite (6) des Gehäusekörpers (2) geneigt ist, um eine Rampe zu bilden, die den Eingriff des Nockens (3, 3') zwischen der Zunge (22) und der Oberseite (6) erleichtert.

3. Gehäuse nach Anspruch 1 oder 2, wobei die Betätigungsmittel zur Betätigung des Schwenknockens (3, 3') einen Hebel (4) umfassen, der entlang einer Seitenfläche (8, 9) des Gehäusekörpers (2) verschiebbar gelagert ist, wobei dieser Hebel (4) ein Ende (28) umfasst, das einen Druckansatz bildet und auf einer Vorderseite (11) des Gehäusekörpers (2) mündet, sowie ein anderes Ende (27), das mit dem Betätigungsende (16) des Nockens (3, 3') verbunden ist, um diesen Nocken (3,3') durch Drücken des den Druckansatz bildenden Endes (28) zu verschwenken.

4. Gehäuse nach einem der Ansprüche 1 bis 3, wobei der Gehäusekörper an seinem oberen hinteren Teil zwei Laschen (18, 41) umfasst, die parallel zu dieser Oberseite (6) ausgerichtet sind, sowie zwei Nasen (19, 42), die jeweils von der Oberseite abstehen und sich jeweils gegenüber einer dieser Laschen (18, 41) befinden, wobei diese Laschen (18, 41) zu beiden Seiten einer Hauptsymmetrieebene des Gehäusekörpers (2) angeordnet sind und wobei diese Nasen (19, 42) zu beiden Seiten einer Hauptsymmetrieebene des Gehäuses (2) angeordnet sind.

5. Gehäuse nach den Ansprüchen 3 und 4, wobei der Gehäusekörper (2) Führungselemente (29, 30, 32, 33, 36, 37, 38, 39) zum Führen eines Hebels (4) umfasst, die ermöglichen, dass dieser Hebel (4) verschiebbar entweder entlang einer Seitenfläche (8) dieses Gehäusekörpers oder entlang einer anderen Seitenfläche (9) dieses Gehäusekörpers gelagert ist.

## Claims

1. A box (1) for receiving a removable element, the box comprising a box body (2) generally in the form of a rectangular parallelepiped and fitted with a tilting cam (3, 3') of cut-out sheet metal situated in the rear portion of the box body (2), the tilting cam (3, 3') having an actuation end (16) and an ejection end (14) situated on either side of a central portion (17) of said cam (3, 3') for the purpose of ejecting the removable element when the cam (3, 3') is tilted about its central portion (17), the box being **characterized in that** the box body (2) has in the rear portion of its top face (6) a tab (18, 41) including a base (21) extended by a tongue (22) that extends parallel to said top face (6) while being spaced apart from said top face (6), together with a lug (19, 42) projecting from the top face (6) and situated facing a free end of the tongue (22), and **in that** the tilting cam (3, 3') is secured to the box body (2) by snap-fastening, having its central portion (17) engaged firstly between the tongue (22) and the top face (6) of the box body (2), and secondly between the lug (19) and the base (21).

2. A box according to claim 1, wherein the lug (19, 42) has a face (24) directed away from the free end of the tongue (22) and inclined relative to the top face (6) of the box body (2) to constitute a ramp facilitating engagement of the cam (3, 3') between the tongue (22) and the top face (6).

3. A box according to claim 1 or claim 2, further comprising a lever (4) of stamped sheet metal slidably mounted along a side face (8, 9) of the box body (2), the lever (4) having an end (28) forming a pushbutton and terminating at the front face (11) of the box body (2), and another end (27) connected to the actuation end (16) of the cam (3, 3') in order to cause said cam (3, 3') to tilt by pushing against the pushbutton-forming end (28).

4. A box according to any one of claims 1 to 3, wherein the box body includes two tabs (18, 41) in its rear portion, which tabs extend parallel to said top face (6), and two lugs (19, 42) each projecting from said top face and each situated facing one of the tabs (18, 41), the tabs (18, 41) being arranged on either side of a general plane of symmetry of the box body (2), and the lugs (19, 42) being arranged on either side of a general plane of symmetry of the box (2).

5. A box according to claim 3 and claim 4, wherein the box body (2) includes guide elements (29, 30, 32, 33, 36, 37, 38, 39) for guiding a lever (4), and enabling the lever (4) to be slidably mounted either along one side face (8) of the box body, or else along another side face (9) of the box body.
